# FASCICULE DE BREVET EUROPEEN

(11) **EP 2 834 089 B1**
(45) Date de publication et mention de la délivrance du brevet: **08.06.2016**
(21) Numéro de dépôt: 13718806.6
(22) Date de dépôt: 05.04.2013
(51) Int. Cl.: B60C 11/03, B60C 11/12, B60C 11/04, B60C 11/00

(54) **BANDE DE ROULEMENT DE PNEU POUR ESSIEU MOTEUR DE POIDS LOURD**
REIFENLAUFFLÄCHE FÜR EINE DURCH EIN SCHWERLASTFAHRZEUG GETRIEBENE ACHSE
HEAVY GOODS VEHICLE DRIVEN AXLE TYRE TREAD

(30) Priorité: 05.04.2012 FR 1253170
(43) Date de publication de la demande: 11.02.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: RADULESCU, Robert Ciprian, F-63040 Clermont-Ferrand Cedex 9 (FR); MARLIER, Fabien, F-63040 Clermont-Ferrand Cedex 9 (FR); QUANTINET, Benjamin, F-63040 Clermont-Ferrand Cedex 9 (FR); ROLLAND, Maxime, F-63040 Clermont-Ferrand Cedex 9 (FR)
(74) Mandataire: Diernaz, Christian
(86) Numéro de dépôt international: PCT/EP2013/057223
(87) Numéro de publication internationale: WO 2013/150143

(56) Documents cités:
- WO-A2-02/38399
- JP-A- 2003 159 910

## Description

### DOMAINE DE L'INVENTION

La présente invention concerne les pneus pour véhicules de type poids lourd et plus particulièrement les bandes de roulement de tels pneus destinés à équiper des essieux moteurs de véhicules poids lourd.

D'une manière générale, un pneu pour véhicule poids lourd tels que camions, bus, tracteurs, comprend une armature de carcasse comprenant une pluralité de renforts disposés radialement, c'est-à-dire formant un angle égal ou proche de 90 degrés avec la direction circonférentielle, cette armature de carcasse étant elle-même surmontée d'une armature de sommet s'étendant dans la direction circonférentielle. Cette armature de sommet est elle-même surmontée sur sa surface radialement extérieure par une bande de roulement réalisée avec au moins un mélange de caoutchouc dont la partie radialement la plus à l'extérieur forme une surface de roulement destinée à venir en contact avec la chaussée pendant le roulage du pneu.

En combinaison avec cette structure interne de pneu, il est connu de pourvoir la bande de roulement, c'est-à-dire la partie du pneu destinée à venir en contact avec le sol lors du roulage et à s'user lors du roulage, d'une sculpture formée d'éléments de relief délimités par des rainures qu'elles soient d'orientation circonférentielle, transversale ou oblique. L'objectif d'une telle sculpture est de conférer à la bande de roulement de bonnes performances en roulage sur chaussée sèche et sur chaussée revêtue d'eau notamment par temps de pluie.

Pour améliorer les performances des bandes de roulement sans toutefois trop abaisser les rigidités de cisaillement desdites bandes, il est connu de former sur la surface de roulement une pluralité d'arêtes orientées transversalement ou en oblique afin de couper la pellicule d'eau sur une chaussée pour assurer un bon contact entre la bande de roulement et la chaussée. Un moyen d'obtention de telles arêtes consiste à pourvoir la bande avec une pluralité de découpures, ces découpures ayant la forme de rainures ou la forme d'incisions. On distingue, dans la présente demande, les incisions des rainures en ce que les incisions ont une largeur appropriée pour permettre pendant le roulage un contact au moins partiel entre les parois en vis-à-vis délimitant ces incisions et notamment au cours du passage dans le contact avec le sol, ce qui ne saurait être le cas pour les rainures dans les conditions normales d'usage du pneu.

Combiné à ce besoin d'améliorer la performance d'adhérence par la présence d'arêtes formées par les découpures transversales, il est également requis que les performances d'une bande de roulement soient pérennes, c'est-à-dire que des performances satisfaisantes soient atteintes même après une usure partielle plus ou moins avancée. Par usure partielle d'une bande de roulement, on entend un état d'usure correspondant à une épaisseur de bande de roulement au plus égale à l'épaisseur totale de bande pouvant être usée avant de devoir changer le pneu notamment pour des raisons de réglementation.

La formation d'une pluralité de découpures dans une bande de roulement, si elle est favorable pour améliorer les performances d'adhérence notamment sur sol mouillé, se traduit par une baisse significative des rigidités de la bande de roulement, par l'absence de matière, ce qui peut se révéler défavorable en usure. Ceci est d'autant plus vrai que la bande de roulement doit offrir à l'usager une pérennité des performances et qu'en conséquence l'épaisseur totale à user doit être relativement importante. En moyenne, pour un pneu destiné à être monté sur un essieu moteur, cette épaisseur est au moins égale à 18 mm, cette épaisseur tenant compte de l'épaisseur additionnelle nécessaire à l'opération dite de "recreusage" *-"regrooving"* en anglais.

### ÉTAT DE LA TECHNIQUE

La demande de brevet WO 02/38399-A2 décrit une bande de roulement pour pneu de véhicule poids lourd, cette bande de roulement comprenant une pluralité de rainures circonférentielles et transversales. Les rainures transversales sont formées d'une alternance de zones en creux et d'incisions de façon à avoir un volume de creux s'ouvrant sur la surface de roulement à l'état neuf et un volume de creux cachés, ces creux cachés étant destinés à s'ouvrir après une usure partielle de la même bande de roulement. La présence de creux cachés - apparaissant avec l'usure, permet d'avoir une plus grande rigidité à l'état initial tout en assurant une performance d'adhérence quel que soit le niveau d'usure de la bande.

La demande de brevet WO 2011/039194-A1 décrit un nouveau type de sculpture de bande de roulement selon lequel la pérennité des performances d'une bande de roulement est obtenue grâce à une gestion particulière des volumes de creux dans ladite bande de roulement.

Dans cette demande de brevet WO 2011/039194-A1, il est décrit une bande de roulement pour pneu de véhicule poids lourd qui est pourvue d'au moins une rainure délimitée par des parois latérales en vis-à-vis, cette rainure débouchant sur la surface de roulement de façon discontinue en une pluralité de portions ouvertes vers l'extérieur de la bande, les parois latérales étant reliées par une partie formant le fond de la rainure. Ces portions ouvertes comprennent deux extrémités se prolongeant sous la surface de roulement par des premiers canaux, les canaux ayant des entrées reliées aux extrémités des portions ouvertes. Chacune de ces rainures offre une capacité de drainage à l'état neuf par la continuité avec les canaux ; cette capacité de drainage est remplie à l'état usé dès lors qu'en combinaison avec ces premiers canaux des deuxièmes canaux continus sont formés intégralement sous la surface de roulement, ces deuxièmes canaux étant ou non reliés aux premiers canaux. Ainsi, il est possible de limiter la diminution des rigidités de la bande de roulement, notamment la rigidité de cisaillement sous efforts tangentiels exercés en roulage dans le contact avec une chaussée, tout en conservant une capacité appropriée des rainures à évacuer l'eau présente sur la chaussée.

Par rapport à l'état de la technique antérieur, ce type de rainure permet - tout en assurant le niveau minimum de drainage grâce à la présence d'un volume de creux approprié et ouvert sur la surface de roulement - de conserver à la bande de roulement des rigidités, notamment de cisaillement, qui sont plus grandes que celles de bandes pourvues de rainures ayant des profondeurs au moins égales à l'épaisseur de matière à user pendant le roulage.

### Définitions :

Le taux de creux volumique d'une sculpture d'une bande de roulement à l'état neuf est égal au rapport entre le volume des creux (formés notamment par des rainures, des incisions, des cavités) délimités par les éléments de relief (blocs, nervures) et le volume total de la bande de roulement comprenant le volume de matière à user et le volume des creux. Un taux de creux volumique faible indique un faible volume de creux relativement au volume de la bande de roulement. Pour chaque niveau d'usure, on peut également définir un volume de creux.

Le taux de creux surfacique d'une sculpture d'une bande de roulement est égal au rapport entre la surface des creux sur la surface de roulement à un état d'usure donné rapporté à la surface de la surface de roulement à laquelle on ajoute la surface des creux sur la surface de roulement. Ce taux de creux surfacique peut être évalué à l'état neuf et à différents niveaux d'usure de la bande. Il est connu que ce taux de creux surfacique doit être si possible constant si on veut la pérennité des performances avec l'usure.

Un bloc est un élément en relief formé sur une bande de roulement, cet élément étant délimité par des creux ou rainures et comprenant des parois latérales et une face de contact, cette dernière étant destinée à venir en contact avec la chaussée pendant le roulage.

Une nervure est un élément en relief formé sur une bande de roulement, cet élément étant délimité par deux rainures. Une nervure comprend deux parois latérales et une face de contact, cette dernière étant destinée à venir en contact avec la chaussée.

L'épaisseur totale E d'une bande de roulement est mesurée, sur le plan équatorial du pneu pourvu de cette bande, entre la surface de roulement et la partie radialement la plus à l'extérieur de l'armature de sommet à l'état neuf.

Une bande de roulement a une épaisseur maximale PMU de matière à user en roulage, cette épaisseur maximale PMU étant inférieure à l'épaisseur totale E.

Par direction radiale, on entend une direction qui est perpendiculaire à l'axe de rotation du pneu (cette direction correspond à la direction de l'épaisseur de la bande de roulement).

Par direction axiale, on entend une direction parallèle à l'axe de rotation du pneu.

Par direction circonférentielle ou longitudinale, on entend une direction qui est tangente à tout cercle centré sur l'axe de rotation. Cette direction est perpendiculaire à la fois à la direction axiale et à une direction radiale.

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage.

Les conditions d'utilisation du pneu, telles que définies notamment par la norme E.T.R.T.O., précisent la pression de gonflage de référence correspondant à la capacité de charge du pneu indiquée par son indice de charge et son code vitesse.

L'empreinte de contact avec la chaussée est réalisée avec le pneu en statique, à partir de laquelle on calcule une valeur moyenne de longueur d'empreinte.

Le plan équatorial ou plan médian correspond à un plan perpendiculaire à l'axe de rotation du pneu et divisant le pneu en deux parties égales ou sensiblement égales.

### BREF EXPOSÉ DE L'INVENTION

Le besoin existe d'une bande de roulement pour un pneu destiné plus particulièrement à équiper un essieu moteur d'un véhicule poids lourd, c'est-à-dire un essieu sur lequel les pneus et donc les bandes de roulement sont soumis à des efforts moteur et/ou freineur, cette bande assurant au pneu à la fois des performances améliorées en adhérence sur chaussée revêtue d'eau quel que soit le niveau d'usure de la bande, des performances améliorées en usure et des performances améliorées en comportement sur chaussée sèche, ces améliorations devant le moins possible porter atteinte à la pérennité des performances avec l'usure de la bande.

Ainsi, le pneu pour véhicule poids lourd conforme à l'invention, comprend une armature de carcasse surmontée par une armature de sommet, cette armature de sommet s'étendant de part et d'autre d'un plan équatorial divisant le pneu en deux parties égales ou sensiblement égales, et radialement à l'extérieur de cette armature de sommet une bande de roulement ayant une surface de roulement pour venir en contact avec la chaussée, cette bande ayant une largeur W et une épaisseur totale E, cette épaisseur totale E correspondant à l'épaisseur totale de matière mesurée sur le plan équatorial entre la surface de roulement et la partie radialement la plus à l'extérieur de l'armature de sommet, cette bande de roulement ayant une épaisseur maximale PMU de matière à user en roulage, cette épaisseur maximale PMU étant au plus égale à l'épaisseur totale E.

Cette bande de roulement comprend au moins deux rainures circonférentielles délimitant au moins une rangée intermédiaire d'indice (i) et deux rangées de bord d'indice (e), ces rangées de bord délimitant axialement la bande de roulement dans sa largeur W. En outre, cette bande comprend une pluralité de découpures transversales formées sur chacune des rangées intermédiaires et de bord. L'ensemble des rainures et découpures s'ouvrant sur la surface de roulement à l'état neuf et quelle que soit leur orientation, représentent à l'état neuf un volume total de creux ouvert sur la surface de roulement ayant un volume Vco, ce volume Vco étant au plus égal à 16% du volume total Vt de la bande de roulement (ce volume Vt étant égal à la somme des volumes de matière à user Vmu et de tous les creux, qu'ils soient ou non ouverts sur la surface de roulement à l'état neuf).

Cette bande de roulement comprend en outre des canaux ou cavités s'étendant sous la surface de roulement à l'état neuf, ces canaux formant un volume total Vcc de creux caché et sont destinés à former de nouvelles rainures après usure partielle de la bande de roulement et avant usure complète de ladite bande.

À l'état initial, cette bande de roulement est telle que le volume Vcc de creux caché total est au moins égal à 30% du volume de creux Vco débouchant sur la surface de roulement à l'état neuf.

Les rangées intermédiaires d'indice (i) ainsi que les rangées de bord d'indice (e) sont pourvues chacune d'une pluralité de découpures transversales ou obliques (c'est-à-dire en faisant un angle moyen au plus égal à 50 degrés) réparties sur chaque rangée d'une façon régulière ou quasiment régulière avec un pas moyen respectivement Pi pour les rangées intermédiaires d'indice (i) et un pas Pe pour les rangées de bord d'indice (e). Ces découpures ont des profondeurs moyennes égales respectivement à Di, De. Ces profondeurs Di et De sont au moins égales à 20% de l'épaisseur PMU.

Ces découpures transversales prennent la forme soit d'incisions soit de rainures ou d'une combinaison d'incisions et de rainures. Une incision se distinguant d'une rainure en ce que les parois qui la délimitent viennent en contact au moins en partie lors du passage dans le contact avec une chaussée pendant le roulage aux conditions d'utilisation.

Cette bande de roulement est caractérisée en ce que :
sur les rangées de bord, le pas moyen des découpures est déterminé de façon que soit satisfaite la relation : 1.30 < Pe/De < 3.00, et
sur les rangées intermédiaires, le pas moyen des découpures est déterminé de façon que soit satisfaite la relation : 1.00 < Pi/Di < 1.70, et
le pas Pe des découpures sur les rangées bord est supérieur au pas Pi sur les rangées intermédiaires.

Préférentiellement, le pas Pe des découpures sur les rangées bord est déterminé pour être compris entre 1.25 et 1.80 fois le pas Pi des découpures sur les rangées intermédiaires.

Grâce à ces dispositions particulières de structure, il est possible de pourvoir une bande de roulement, cette bande de roulement ayant un volume de matière à user qui peut être sensiblement réduit par rapport à celui des bandes de roulement couramment en usage avant l'invention, d'un grand nombre d'arêtes d'orientation générale transversale à la fois sur les rangées intermédiaires et sur les rangées de bord sans que pour autant la tenue en endurance de cette bande soit compromise par la présence de ces nombreuses incisions. Il est ainsi possible d'ajuster les rigidités entre les rangées intermédiaires et les rangées de bord d'une bande afin d'atteindre les performances recherchées. Ceci n'est pas tout à fait possible avec les bandes de roulement de l'art antérieur lesquelles, compte tenu de leur grande épaisseur et du volume total de creux ouvert sur la surface de roulement à l'état neuf en général supérieur à 16% du volume de matière à user, imposent de former, sur les rangées de bords, des rainures transversales avec des pas moyens élevés et tels que le rapport du pas moyen divisé par la profondeur moyenne de rainures est supérieur à 2.00.

En fait, il semble que la combinaison d'un volume de creux caché prévu pour apparaître sur la surface de roulement de la bande de roulement après une usure partielle de cette bande avec ces spécifications sur les découpures transversales permette d'atteindre un équilibre mécanique particulièrement intéressant et a priori surprenant pour la personne du métier compte tenu de ses connaissances.

Sur chaque rangée intermédiaire, les profondeurs des découpures peuvent être identiques ou voisines entre elles. Il en est de même sur les rangées de bord.

Par arêtes d'orientation générale transversale, il faut comprendre que les arêtes font avec la direction axiale (ou transversale) un angle qui peut être non nul ; cet angle est au plus égal à 50°.

Préférentiellement, un tel pneu est destiné à équiper un essieu moteur ("*Drive*" en anglais) d'un véhicule poids lourd pour lequel les couples moteur et freineur appliqués aux pneus sollicitent de manière significative leurs bandes de roulement dans le contact avec la chaussée.

Selon une variante préférentielle de l'invention, le volume de creux ouverts sur la surface de roulement à l'état neuf est au plus égal à 13% et encore plus préférentiellement inférieur à 10%.

Préférentiellement, l'invention s'applique à des bandes de roulement dont l'épaisseur totale à user PMU (cette épaisseur PMU incluant la partie liée à une éventuelle opération de recreusage) est au plus égale à 23 mm.

Selon une variante de l'invention, la bande de roulement est telle que, à l'état neuf, les premiers creux cachés s'ouvrent sur la surface de roulement après une usure partielle au moins égale à 20% de l'épaisseur PMU et au plus égale à 70% de la même épaisseur.

Selon une variante de l'invention, la bande de roulement est telle que, à l'état neuf, au moins une partie des découpures formées sur les rangées intermédiaires et les rangées bord comportent une première partie débouchant sur la surface de roulement à l'état neuf prolongée par une seconde partie. La première partie est formée d'une incision tandis que la seconde est une cavité en forme de canal comprenant deux extrémités s'ouvrant à l'extérieur dans une autre cavité (rainure, canal). Ce canal peut être temporairement obstrué, c'est-à-dire est rempli avec un insert ou un matériau pendant les phases de construction du pneu et apte à être enlevé après usure partielle pour former une nouvelle rainure s'ouvrant sur la surface de roulement.

Selon une autre variante, la bande de roulement selon l'invention est telle que, chaque incision étant délimitée par des faces en vis-à-vis, ces faces comprennent des moyens de blocage mécanique des mouvements relatifs desdites faces l'une par rapport à l'autre. De tels moyens peuvent par exemple prendre la forme de creux et de bosses.

Selon une autre variante de l'invention, la bande de roulement est telle qu'une pluralité de canaux ou cavités s'étendent dans l'épaisseur de la bande jusqu'à une profondeur supérieure à l'épaisseur maximale de matière à user PMU et au plus jusqu'à l'épaisseur totale E. Ainsi même après avoir atteint le niveau légal d'usure maximale, le pneu conserve des arêtes et un volume de drainage suffisant pour assurer la sécurité du roulage.

De manière avantageuse, la bande de roulement selon l'invention telle que décrite est prévue pour équiper un pneu dont l'usage préconisé est d'être monté sur un essieu moteur d'un véhicule poids lourd.

D'autres caractéristiques et avantages de l'invention ressortent de la description faite ci-après en référence aux dessins annexés qui montrent, à titre d'exemples non limitatifs, des variantes de réalisation de l'objet de l'invention.

### BRÈVE DESCRIPTION DES FIGURES

La figure 1 montre une vue en plan d'une partie d'une bande de roulement d'un pneu selon l'invention ;
La figure 2 montre une vue en coupe dans un plan oblique par rapport à l'axe de rotation du pneu, ce plan étant repéré par sa trace II-II sur la figure 1 ;
La figure 3 montre une vue en coupe dans un plan coupant une nervure de bord et perpendiculaire à l'axe de rotation ; ce plan est repéré sur la bande de roulement montrée avec la figure 1 par sa trace III-III ;
La figure 4 montre une vue en coupe dans un plan perpendiculaire à l'axe de rotation et coupant une rangée intermédiaire et repéré sur la bande de roulement montrée avec la figure 1 par sa trace IV-IV.

### DESCRIPTION DES FIGURES

Pour les figures accompagnant cette description, des mêmes signes de référence peuvent être employés pour décrire des variantes de l'invention dès lors que ces signes de référence renvoient à des éléments d'une même nature, que cette nature soit structurelle ou bien fonctionnelle.

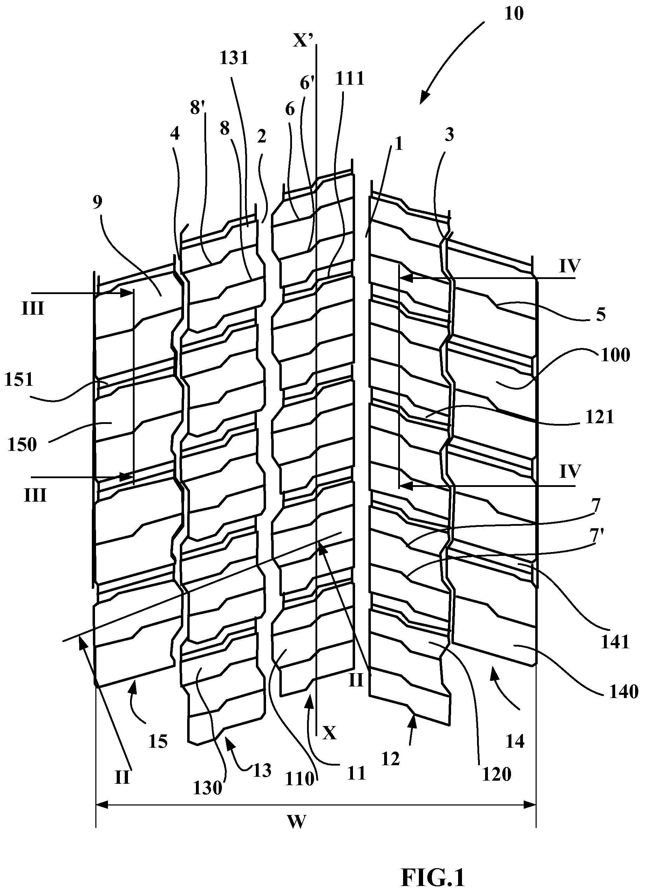

La figure 1 montre, vue en plan, une partie d'une bande de roulement 10 d'un pneu selon l'invention. Ce pneu de dimension 315/70 R 22.5 est destiné à équiper un essieu moteur d'un véhicule poids lourd. Ce pneu comprend une armature de sommet non représenté sur cette figure et, surmontant cette armature de sommet, une bande de roulement 10 dont on voit la surface de roulement 100 à l'état neuf (c'est-à-dire avant tout roulage) ; la surface de roulement correspond à la surface radialement la plus à l'extérieur destinée à venir en contact avec une chaussée lors du roulage du pneu.

Cette bande de roulement de largeur W égale à 280 mm est pourvue de quatre rainures principales 1, 2, 3, 4 d'orientation générale circonférentielle divisant la bande en cinq rangées circonférentielles 11, 12, 13, 14, 15. Ces cinq rangées comprennent deux rangées de bord 14, 15 délimitant axialement la largeur de la bande et trois rangées intermédiaires 11, 12, 13.

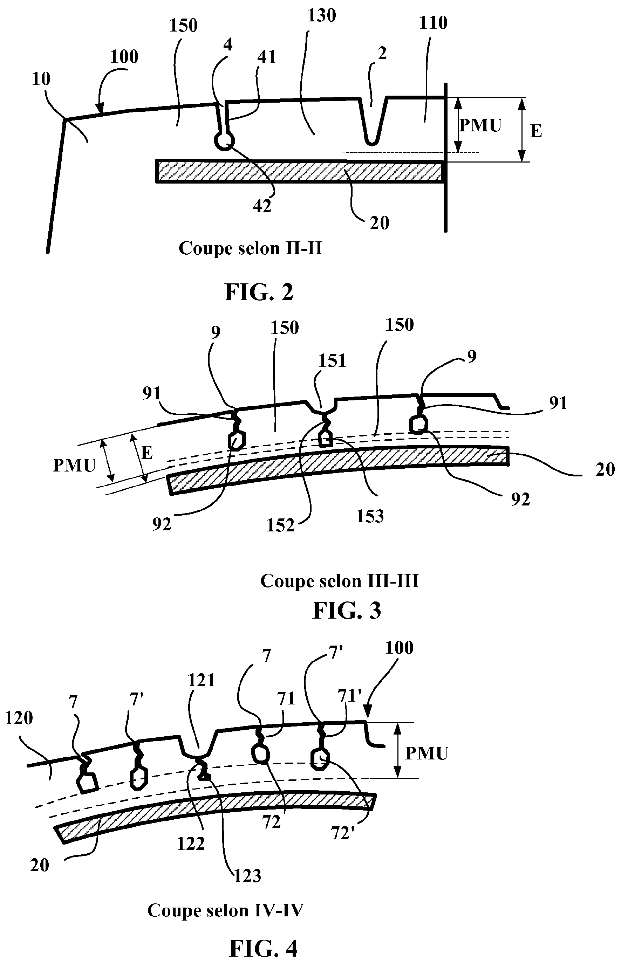

Les rainures principales circonférentielles 1, 2, 3, 4 ont une même profondeur égale ici à 17 mm. Les deux rainures circonférentielles 1, 2 encadrant la rangée centrale 11 formée sur le plan équatorial XX' (plan divisant la bande en deux parties de même largeur) ont une largeur moyenne sur la surface de roulement égale à 10.5 mm. Les deux autres rainures circonférentielles 3, 4 ont une largeur égale à 3.5 mm sur la même surface de roulement. Ces dernières rainures 3, 4 s'élargissent à partir d'une profondeur égale à 11 mm de manière à pouvoir former des rainures de largeur égale à 6 mm comme cela est visible sur la figure 2 montrant une coupe selon un plan coupant la surface de roulement selon la ligne oblique II-II.

En outre, cette bande de roulement est prévue pour permettre une opération dite de "recreusage" ("*regrooving*" en anglais), c'est-à-dire que chaque rainure principale 1, 2, 3, 4 peut faire l'objet, avant d'atteindre le niveau limite d'usure, d'une opération de creusage mécanique pour recréer une rainure ayant une profondeur moyenne de quelques millimètres. Dans le cas présent, la hauteur maximale de matière à user, correspondant à une épaisseur notée "PMU" est, à l'état neuf, égale à 20 mm (ce qui correspond à la profondeur des rainures égale à 17 mm à laquelle s'ajoute une épaisseur de 3 mm prévue pour réaliser l'opération de recreusage).

Les rangées intermédiaires 11, 12, 13 sont pourvues de découpures transversales disposées avec un pas moyen Pi égal à 22 mm comme cela est également visible sur la figure 4. Ces découpures comprennent à la fois des rainures transversales 111, 121, 131 - de largeur égale à 10.5 mm - ces rainures s'ouvrant sur la surface de roulement à l'état neuf et délimitant avec les rainures principales circonférentielles des blocs de sculpture 110, 120, 130, et des incisions 6, 6' 7, 7', 8, 8' - de largeur égale à 0.4 mm - au nombre de deux par bloc. Le pas moyen Pi des découpures transversales sur les rangées intermédiaires est évalué sur le tour complet en tenant compte de l'ensemble des découpures transversales (à la fois les rainures transversales et les incisions transversales).

La profondeur moyenne Di des découpures transversales sur les rangées intermédiaires 11, 12, 13 est égale à la moyenne des profondeurs maximales de toutes les découpures transversales ; elle est, dans le cas présent, égale à 15.3mm.

Les rangées de bords 14, 15 sont pourvues de découpures transversales disposées avec un pas moyen Pe égal à 33 mm comme cela est également visible sur la figure 3. Ces découpures comprennent à la fois des rainures transversales 141, 151 - de largeur égale à 10.5 mm - délimitant avec les rainures principales circonférentielles des blocs de sculpture 140, 150, et des incisions 5, 9 - de largeur égale à 0.4 mm - au nombre de une incision par bloc. Le pas moyen Pe des découpures transversales est évalué sur le tour complet en tenant compte de l'ensemble desdites découpures transversales de chaque rangée de bord (à la fois les rainures transversales et les incisions transversales).

La profondeur moyenne De des découpures transversales sur les rangées bord est égale à la moyenne des profondeurs maximales de toutes les découpures transversales ; elle est, dans le cas présent, égale à égale à 14.7 mm.

La sculpture dont est pourvue la bande de roulement de la variante ici décrite, est asymétrique par rapport au plan équatorial, cette asymétrie étant obtenue par une même inclinaison des découpures transversales sur une rangée de bord et deux rangées intermédiaires et une inclinaison de sens opposé des découpures transversales sur la dernière rangée intermédiaire et l'autre rangée de bord.

La figure 2 montre une vue en coupe d'une partie du pneu, cette coupe étant réalisée dans un plan oblique sensiblement parallèle à l'inclinaison des découpures transversales, ce plan étant repéré par sa trace II-II sur la figure 1.

Sur cette figure 2, on distingue une partie de l'armature de sommet 20 s'étendant de part et d'autre du plan équatorial P divisant le pneu en deux parties. Ce plan équatorial P coupe les blocs 110 de la rangée centrale. La bande a une épaisseur E mesurée sur le plan équatorial entre le point radialement le plus à l'extérieur de l'armature de sommet 20 et le point radialement le plus à l'extérieur de la bande. L'épaisseur maximale de bande à user en roulage est repérée par l'épaisseur PMU mesurée entre la surface de roulement et une épaisseur de recreusage radialement à l'intérieur du fond de la rainure 2.

Surmontant radialement vers l'extérieur cette armature 20, on trouve la bande de roulement 10 comprenant une rainure 2 orientée circonférentiellement et une incision 4, ces deux découpures s'ouvrant sur la surface de roulement 100 à l'état neuf. L'incision 4 se prolonge par un canal 42. Les profondeurs maximales des découpures 2 et 4 sont, dans le cas présent, identiques.

La figure 3 montre une vue en coupe dans un plan coupant une nervure de bord et perpendiculaire à l'axe de rotation et repéré sur la bande de roulement montrée avec la figure 1 par sa trace III-III.

Comme cela est visible sur la figure 3, les découpures transversales sont soit des rainures 151 prolongées vers l'intérieur de la bande de roulement par des incisions 152 en zigzag, chacune desdites incisions 152 étant elle-même prolongée par un canal 153, soit des incisions 9 formées d'une première partie 91 en zigzag prolongée par un canal 92. La profondeur maximale des incisions 9 est égale à 13.0 mm, tandis que la profondeur du canal 153 est égale à 16.5 mm (cette dernière profondeur correspond à la distance séparant le fond du canal 153 de la surface de roulement à l'état neuf). Ce qui conduit à une profondeur moyenne Di égale à 14.7 mm. Les rainures 151 délimitent les blocs 150 à l'intérieur desquels les incisions 9 sont formées.

Les incisions 9 ont une largeur égale à 0.4 mm et ont une géométrie en zigzag afin de favoriser un blocage mécanique des parois en vis-à-vis. Ces incisions 9 sont aptes à se fermer au moins en partie lors du passage dans le contact lors du roulage. Chaque incision 9 est prolongée dans l'intérieur de la bande de roulement par un canal 92 de hauteur égale à 6 mm et de largeur égale à 4 mm. Chaque canal 92 est prévu pour s'ouvrir sur la surface de roulement après une usure égale à 6 mm afin de former de nouvelles rainures.

Les rainures 151 ont une largeur égale à 10 mm et une profondeur égale à 4.0 mm ; ces rainures 151 sont prolongées par une incision 152 de largeur égale à 0.4 mm, cette incision étant elle-même prolongée par un canal 153 de 6 mm de largeur et de 4 mm de profondeur.

La figure 4 montre une vue en coupe dans un plan coupant une rangée intermédiaire et perpendiculaire à l'axe de rotation et repéré sur la bande de roulement montrée avec la figure 1 par sa trace IV-IV.

Sur cette coupe, on distingue une rainure 121 s'ouvrant sur la surface de roulement 100 prolongée par une incision 122, cette incision se prolongeant par un canal 123 ayant les dimensions suivantes : 3 mm en largeur et 1.5 mm en profondeur. La profondeur maximale du canal 123 est égale à 16.5 mm (cette dernière profondeur correspond à la distance séparant le fond du canal 123 de la surface de roulement à l'état neuf).

Entre deux rainures 121 on distingue deux découpures 7, 7' comprenant une première partie formée par une incision en zigzag 71, 71' dans la profondeur de la bande, ces incisions 71, 71' étant prolongées par des canaux 72, 72' de dimensions identiques. Afin de régulariser l'usure de la bande, il est judicieux que les nouvelles rainures formées par les canaux n'apparaissent pas toutes en même temps (c'est-à-dire à partir d'un même niveau d'usure partielle). En outre, les incisions 7 ont une profondeur maximale égale à 13 mm tandis que les incisions 7' ont une profondeur maximale égale à 16.5 mm.

La moyenne des profondeurs Di des découpures transversales sur chaque rangée intermédiaire est égale, dans le cas présent, à 15.3mm.

Dans le cas présent, l'ensemble des rainures circonférentielles et des découpures transversales constituent à l'état neuf un volume total de creux ouvert sur la surface de roulement Vco qui est égal à 1900 cm³. Ce volume total Vco ne comprend pas les volumes de creux cachés (c'est-à-dire le volume des canaux destinés à former de nouvelles rainures après usure partielle) ni celui des incisions formées sous la surface de roulement.

Les canaux forment un creux caché de volume total Vcc égal dans le cas présent à 720 cm³ (soit 37% du volume de creux total Vco s'ouvrant sur la surface de roulement de la bande de roulement à l'état neuf).

Le volume total Vt est égal à la somme des volumes de matière à user Vmu et de tous les creux qu'ils soient ouverts ou cachés. Dans le cas présent, le volume total Vt est égal à 14 640 cm³.

En conséquence, le volume caché Vcc représente environ 5% du volume total Vt de la bande de roulement tel que défini plus haut, et le volume de creux ouvert Vco est égal à 13% du même volume total Vt.

Sur cet exemple de pneu selon l'invention, les relations préconisées sont satisfaites puisque : sur les rangées de bord, le rapport Pe/De est égal à 2.24, et sur les rangées intermédiaires, le rapport Pi/Di est égal à 1.44. En outre, le pas moyen Pe des découpures sur les rangées bord est égal à 1.5 fois le pas moyen Pi sur les rangées intermédiaires.

L'invention ayant été décrite de manière générale et au moyen d'une variante, il doit être compris que cette invention n'est en rien limitée à la seule variante décrite. Il est clair que diverses modifications peuvent y être apportées sans sortir du cadre général de la présente invention. Notamment les géométries des canaux et incisions peuvent être adaptées selon le besoin. Des rainures telles que décrites dans la demande de brevet WO 2011/039194-A1 peuvent être avantageusement employées dans le cadre de la présente invention.

## Revendications

1. Bande de roulement (10) ayant une surface de roulement (100) pour venir en contact avec la chaussée, cette bande (10) ayant une largeur W et une épaisseur totale E, cette épaisseur totale E correspondant à l'épaisseur totale de matière mesurée sur le plan équatorial entre la surface de roulement (100) à l'état initial du pneu neuf et la partie radialement la plus à l'extérieur de l'armature de sommet, cette bande de roulement (10) ayant une épaisseur maximale PMU de matière à user en roulage, cette épaisseur maximale PMU étant inférieure à l'épaisseur totale E,
- cette bande de roulement comprenant au moins deux rainures d'orientation générale circonférentielle (1, 2, 3, 4) délimitant au moins une rangée intermédiaire (11, 12, 13) d'indice (i) et deux rangées de bord (14, 15) d'indice (e), ces rangées de bord (14, 15) délimitant axialement la bande de roulement dans sa largeur W,
- cette bande comprenant en outre une pluralité de découpures d'orientation générale transversales formées sur chacune des rangées intermédiaires et de bord, l'ensemble des rainures d'orientation générale circonférentielle et des découpures d'orientation générale transversale représentant à l'état neuf un creux ouvert sur la surface de roulement ayant un volume total Vco, ce volume Vco étant au plus égal à 16% du volume total Vt de la bande de roulement, ce volume total Vt étant égal à la somme des volumes de matière à user et de tous les creux,
- cette bande de roulement comprenant en outre des canaux ou cavités (42, 72, 72', 92, 123, 153) sous la surface de roulement (100) à l'état neuf, ces canaux formant un creux caché de volume total Vcc et étant destinés à former de nouvelles rainures après usure partielle de la bande de roulement, ce creux caché ayant à l'état initial un volume total Vcc au moins égal à 30% du volume de creux total Vco débouchant sur la surface de roulement à l'état neuf,
- les rangées intermédiaires (11, 12, 13) d'indice (i) ainsi que les rangées de bord (14, 15) d'indice (e) sont pourvues chacune d'une pluralité de découpures d'orientation transversales ou obliques réparties sur chaque rangée d'une façon régulière ou quasiment régulière avec un pas moyen respectivement Pi pour les rangées intermédiaires et Pe pour les rangées de bord, ces découpures ayant des profondeurs moyennes, respectivement Di, De, qui sont au moins égales à 20% de l'épaisseur PMU et au plus égales à cette même épaisseur PMU, cette bande de roulement étant **caractérisée en ce que** :
- sur les rangées de bord (14, 15), le pas moyen Pe des découpures est déterminé de façon que soit satisfaite la relation 1.30 < Pe/De < 3.00, et
- **en ce que** sur les rangées intermédiaire (11, 12, 13), le pas moyen Pi des découpures satisfait la relation 1.00 < Pi/Di < 1.70, et
- **en ce que** le pas moyen Pe des découpures sur les rangées bord est supérieur au pas Pi sur les rangées intermédiaires.

2. Bande de roulement selon la revendication 1 **caractérisée en ce que** le pas Pe des découpures sur les rangées bord et le pas Pi sur les rangées intermédiaires satisfont la relation : 1.25 < Pe/Pi < 1.80.

3. Bande de roulement selon la revendication 1 ou selon la revendication 2 **caractérisée en ce que** le volume de creux ouvert Vco à l'état neuf est au plus égal à 13% du volume total Vt de la bande de roulement.

4. Bande de roulement selon la revendication 1 ou selon la revendication 2 **caractérisée en ce que** le volume de creux ouvert Vco à l'état neuf est au plus égal à 10% du volume total Vt de la bande de roulement.

5. Bande de roulement selon l'une des revendications 1 à 4 **caractérisée en ce que** les premiers creux cachés s'ouvrent sur la surface de roulement après une usure partielle au moins égale à 20% de l'épaisseur PMU et au plus égale à 70% de la même épaisseur.

6. Bande de roulement selon l'une des revendications 1 à 5 **caractérisée en ce que** l'épaisseur totale à user PMU, cette épaisseur incluant la partie liée à un éventuel recreusage, est au plus égale à 23 mm.

7. Bande de roulement selon l'une des revendications 1 à 6 **caractérisée en ce qu'**une pluralité de canaux s'étendent dans l'épaisseur de la bande jusqu'à une profondeur supérieure à l'épaisseur maximale de matière à user PMU et au plus jusqu'à l'épaisseur totale E.

8. Pneu pour véhicule poids lourd, ce pneu comprenant une armature de carcasse surmontée par une armature de sommet, cette armature de sommet s'étendant de part et d'autre d'un plan équatorial divisant le pneu en deux parties égales ou sensiblement égales, ce pneu comprenant radialement à l'extérieur de l'armature de sommet une bande de roulement selon l'une quelconque des revendications 1 à 7, ce pneu étant **caractérisé en ce qu'**il est destiné à être monté sur un essieu moteur d'un véhicule poids lourd.

## Patentansprüche

1. Reifenlauffläche (10) mit einer Lauf-Oberfläche (100), um mit der Straße in Kontakt zu kommen, wobei diese Fläche (10) eine Breite W und eine Gesamtdicke E aufweist, wobei diese Gesamtdicke E der Gesamtdicke an Material entspricht, welche in der äquatorialen Ebene zwischen der Lauf-Oberfläche (100) im Ausgangszustand des neuen Reifens und dem Abschnitt, der von der Scheitelbewehrung radial am weitesten nach außen gelegen ist, gemessen wird, wobei diese Reifenlauffläche (10) eine maximale Dicke PMU von im Einsatz zu verschleißendem Material aufweist, wobei die maximale Dicke PMU kleiner als die Gesamtdicke E ist,
- wobei diese Reifenlauffläche mindestens zwei Rillen von allgemeiner umfänglicher Orientierung (1, 2, 3, 4) aufweist, welche mindestens eine mittlere Reihe (11, 12, 13) vom Index (i) und zwei Randreihen (14, 15) vom Index (e) abgrenzen, wobei diese Randreihen (14, 15) die Reifenlauffläche in ihrer Breite W abgrenzen,
- wobei diese Fläche außerdem eine Vielzahl von quer verlaufenden Ausschnitten von allgemeiner Orientierung aufweist, welche in jeder der mittleren Reihen und der Randreihen ausgebildet sind, wobei die Gesamtheit der Rillen von allgemeiner umfänglicher Orientierung und der quer verlaufenden Ausschnitte von allgemeiner Orientierung im neuen Zustand eine offene Vertiefung auf der Lauf-Oberfläche mit einem Gesamtvolumen Vco darstellt, wobei dieses Volumen Vco höchstens gleich 16% des Gesamtvolumens Vt der Reifenlauffläche beträgt, wobei dieses Gesamtvolumen Vt gleich der Summe der Volumina des zu verschleißenden Materials und sämtlicher Vertiefungen ist,
- wobei diese Reifenlauffläche außerdem Kanäle oder Hohlräume (42, 72, 72', 92, 123, 153) unter der Lauf-Oberfläche (100) im neuen Zustand aufweist, wobei diese Kanäle eine verdeckte Vertiefung von einem Gesamtvolumen Vcc bilden und dafür vorgesehen sind, nach einem teilweisen Verschleiß der Reifenlauffläche neue Rillen zu bilden, wobei diese verdeckte Vertiefung im Ausgangszustand ein Gesamtvolumen Vcc von mindestens gleich 30% des Gesamtvolumens der Vertiefungen Vco aufweist, welche im neuen Zustand in die Lauf-Oberfläche münden,
- die mittleren Reihen (11, 12 13) mit Index (i) sowie die Randreihen (14, 15) mit Index (e) sind jeweils mit quer verlaufenden oder schrägen Ausschnitten zur Orientierung versehen, welche über jede Reihe in gleichmäßiger oder quasi gleichmäßiger Weise mit einer mittleren Teilung Pi für die mittleren Reihen beziehungsweise Pe für die Randreihen verteilt sind, wobei diese Ausschnitte mittlere Tiefen Di beziehungsweise De aufweisen, welche mindestens gleich 20% der Dicke PMU betragen und höchstens gleich dieser selben Dicke PMU sind, wobei diese Reifenlauffläche **dadurch gekennzeichnet ist, dass**:
- in den Randreihen (14, 15) die mittlere Teilung Pe der Ausschnitte derartig festgelegt wird, dass sie der Ungleichung 1.30 < Pe/De < 3.00 genügt, und
- dass in den mittleren Reihen (11, 12, 13) die mittlere Teilung Pi der Ausschnitte der Ungleichung 1.00 < Pi/Di < 1.70 genügt, und
- dass die mittlere Teilung Pe der Ausschnitte in den Randreihen größer als die Teilung Pi in den mittleren Reihen ist.

2. Reifenlauffläche nach Anspruch 1, **dadurch gekennzeichnet, dass** die Teilung Pe der Ausschnitte in den Randreihen und die Teilung Pi in den mittleren Reihen der Ungleichung genügen: 1.25 < Pe/Pi < 1.80.

3. Reifenlauffläche nach Anspruch 1 oder nach Anspruch 2, **dadurch gekennzeichnet, dass** das Volumen der offenen Vertiefung Vco im neuen Zustand höchstens gleich 13% des Gesamtvolumens Vt der Reifenlauffläche beträgt.

4. Reifenlauffläche nach Anspruch 1 oder nach Anspruch 2, **dadurch gekennzeichnet, dass** das Volumen der offenen Vertiefung Vco im neuen Zustand höchstens gleich 10% des Gesamtvolumens Vt der Reifenlauffläche beträgt.

5. Reifenlauffläche nach einem der Ansprüche 1 bis 4, **dadurch gekennzeichnet, dass** die ersten verdeckten Vertiefungen sich der Lauf-Oberfläche nach einem teilweisen Verschleiß von mindestens gleich 20% der Dicke PMU und höchstens gleich 70% derselben Dicke eröffnen.

6. Reifenlauffläche nach einem der Ansprüche 1 bis 5, **dadurch gekennzeichnet, dass** die zu verschleißende Gesamtdicke PMU, wobei diese Dicke den mit einer eventuellen Neuvertiefung verbundenen Teil einschließt, höchstens gleich 23 mm beträgt.

7. Reifenlauffläche nach einem der Ansprüche 1 bis 6, **dadurch gekennzeichnet, dass** sich eine Vielzahl von Kanälen in der Dicke der Fläche bis zu einer Tiefe, welche größer als die maximale Dicke des zu verschleißenden Materials PMU ist, und höchstens bis zur Gesamtdicke E erstrecken.

8. Reifen für ein Schwerlastfahrzeug, wobei dieser Reifen eine Karkassenbewehrung aufweist, welche von einer Scheitelbewehrung überdeckt wird, wobei diese Scheitelbewehrung sich beiderseits einer äquatorialen Ebene erstreckt, welche den Reifen in zwei Gleiche Teile oder im Wesentlichen gleiche Teile teilt, wobei dieser Reifen radial außerhalb der Scheitelbewehrung eine Reifenlauffläche nach einem der Ansprüche 1 bis 7 aufweist, wobei dieser Reifen **dadurch gekennzeichnet ist, dass** er dafür vorgesehen ist, auf einer angetriebenen Achse eines Schwerlastfahrzeugs montiert zu werden.

## Claims

1. Tread (10) having a tread surface (100) to come into contact with the roadway, this tread (10) having a width W and a total thickness E, this total thickness E corresponding to the total thickness of material measured on the equatorial plane between the tread surface (100) when the new tyre is in the initial state and the radially outermost part of the crown reinforcement, this tread (10) having a maximum thickness PMU of material to be worn away during running, this maximum thickness PMU being less than the total thickness E,
- this tread comprising at least two grooves of circumferential overall orientation (1, 2, 3, 4) delimiting at least one intermediate row (11, 12, 13) of suffix (i) and two edge rows (14, 15) of suffix (e), these edge rows (14, 15) axially delimiting the tread in the width W thereof,
- this tread further comprising a plurality of cuts of transverse overall orientation which are formed on each of the intermediate and edge rows, all of the cuts of circumferential overall orientation and cuts of transverse overall orientation representing, in the new state, a void of total volume Vco open onto the tread surface, this volume Vco being at most equal to 16% of the total volume Vt of the tread, this total volume Vt being equal to the sum of the volumes of material to be worn away and of all the voids,
- this tread further comprising channels or cavities (42, 72,72', 92, 123, 153) under the tread surface (100) in the new state, these channels forming a hidden void of total volume Vcc and being intended to form new grooves after the tread has partially worn away, this hidden void having, in the initial state, a total volume Vcc at least equal to 30% of the total void volume Vco opening onto the tread surface in the new state,
- the intermediate rows (11, 12, 13) of suffix (i) and the edge rows (14, 15) of suffix (e) are each provided with a plurality of cuts of transverse or oblique orientation distributed over each row evenly or near-evenly with a mean pitch of respectively Pi in the case of the intermediate rows and Pe in the case of the edge rows, these cuts having mean depths, Di and De respectively, which are at least equal to 20% of the thickness PMU and at most equal to this same thickness PMU, this tread being **characterized in that**:
- on the edge rows (14, 15), the mean pitch Pe of the cuts is determined so that the relationship 1.30 < Pe/De < 3.00 is satisfied, and
- **in that**, on the intermediate rows (11, 12, 13), the mean pitch Pi of the cuts satisfies the relationship 1.00 < Pi/Di < 1.70, and
- **in that** the mean pitch Pe of the cuts on the edge rows is greater than the pitch Pi on the intermediate rows.

2. Tread according to Claim 1, **characterized in that** the pitch Pe of the cuts on the edge rows and the pitch Pi on the intermediate rows satisfy the relationship: 1.25 < Pe/Pi < 1.80.

3. Tread according to Claim 1 or according to Claim 2, **characterized in that** the open-voids volume Vco in the new state is at most equal to 13% of the total volume Vt of the tread.

4. Tread according to Claim 1 or according to Claim 2, **characterized in that** the open-voids volume Vco in the new state is at most equal to 10% of the total volume Vt of the tread.

5. Tread according to one of Claims 1 to 4, **characterized in that** the first hidden voids open onto the tread surface following partial wear representing at least 20% of the thickness PMU and at most 70% of that same thickness.

6. Tread according to one of Claims 1 to 5, **characterized in that** the total thickness to be worn away PMU, this thickness including the part associated with potential regrooving, is at most equal to 23 mm.

7. Tread according to one of Claims 1 to 6, **characterized in that** a plurality of channels extend into the thickness of the tread down to a depth greater than the maximum thickness of material to be worn away PMU and at most down to the total thickness E.

8. Heavy goods vehicle tyre, this tyre comprising a carcass reinforcement surmounted by a crown reinforcement, this crown reinforcement extending on either side of an equatorial plane that divides the tyre into two equal or substantially equal parts, this tyre comprising, radially on the outside of the crown reinforcement, a tread according to any one of Claims 1 to 7, this tyre being **characterized in that** it is intended to be mounted on a driven axle of a heavy goods vehicle.
